# EUROPÄISCHE PATENTANMELDUNG

(11) **EP 1 517 207 A2**
(43) Veröffentlichungstag der Anmeldung: **23.03.2005**
(21) Anmeldenummer: 04104212.8
(22) Anmeldetag: 02.09.2004
(51) Int. Cl.: G05B 19/418

(54) **System zur computergestützten Messung von Qualitäts- und/oder Prozessdaten**

(30) Priorität: 16.09.2003 DE 10342769
(71) Anmelder: Voith Paper Patent GmbH, 89522 Heidenheim (DE)
(72) Erfinder: Münch, Rudolf, 89551 Koenigsbronn (DE); Hardt, Niels, 89522 Heidenheim (DE); Wegmann, Florian, 89542 Herbrechtingen (DE); Holik, Herbert, 88213 Ravensburg (DE)

(57) **Zusammenfassung**

Es wird ein System zur computergestützten Messung von Qualitätsund/oder Prozessdaten bei der Herstellung und/oder Veredelung einer Materialbahn, insbesondere Papier- oder Kartonbahn, durch Korrelation mit Roh-Messdaten, beschrieben, bei dem die
Roh-Messdaten in Form von vielen anderen Qualitäts- bzw. Prozessdaten während des Herstellungs- bzw. Veredelungsprozesses vorliegen,
in die Roh-Messdaten auch Messungen von Qualitätsparametern im Labor mit einbeziehbar sind,
die Roh-Messdaten zu Datensätzen zusammenfassbar sind, die jeweils gleichzeitig ermittelt wurden,
bestimmte Labor- oder Qualtitätsmessungen als Zieldaten auswählbar sind, die mittels wenigstens eines in einer computerbasierten Operations- und Verknüpfungseinheit ablaufenden Softsensor-Algorithmus aus den als Eingangsdaten dienenden anderen Daten berechenbar sind, und wobei jeder Datensatz Messdaten enthält, die sich in etwa auf dasselbe Kontrollvolumen Bahn- bzw. Rohmaterial, insbesondere Papier bzw. Papierrohstoff, beziehen.

## Beschreibung

Die Erfindung betrifft ein System zur computergestützten Messung von Qualitäts- und/oder Prozessdaten bei der Herstellung und/oder Veredelung von Materialbahnen, insbesondere Papier- oder Kartonbahnen, durch Korrelation mit Roh-Messdaten.

Bei Produktionsanlagen, insbesondere bei Anlagen zur Papierherstellung, handelt es sich um technisch aufwändige Großanlagen, die neben der eigentlichen Papiermaschine mit Nassteil, Trockenteil, Kalander, Roller und zugehörigen Peripherieeinheiten vorgeschaltete Einheiten wie z.B. Flotation, Sortierung, Deculatoren sowie nachgeschaltete Systeme wie Rollenaufwickeleinheiten sowie Rollenschneidmaschinen, die Rollenverpackung und den Rollentransport umfassen. Es besteht großes Interesse daran, derartige Produktionsanlagen insbesondere hinsichtlich der erzielten Qualität sowie des Gesamtwirkungsgrades weiter zu optimieren, wozu eine entsprechende Überwachung der Qualitäts- und/oder Prozessdaten erforderlich ist.

Der Erfindung liegt demzufolge die Aufgabe zugrunde, das System zur computergestützten Messung von Qualitäts- und/oder Prozessdaten der eingangs genannten Art entsprechend weiter zu verbessern.

Diese Aufgabe wird erfindungsgemäß gelöst durch ein System zur computergestützten Messung von Qualitäts- und/oder Prozessdaten bei der Herstellung und/oder Veredelung von Materialbahnen, insbesondere Papier- oder Kartonbahnen, durch Korrelation mit Roh-Messdaten, wobei die Roh-Messdaten in Form von vielen anderen Qualitäts- bzw. Prozessdaten während des Herstellungs- bzw. Veredelungsprozesses vorliegen, in die Roh-Messdaten auch Messungen von Qualitätsparametern im Labor mit einbeziehbar sind,
die Roh-Messdaten zu Datensätzen zusammenfassbar sind, die jeweils gleichzeitig ermittelt wurden,
bestimmte Labor- oder Qualitätsmessungen als Zieldaten auswählbar sind, die mittels wenigstens eines in einer computerbasierten Operationsund Verknüpfungseinheit ablaufenden Softsensor-Algorithmus aus den als Eingangsdaten dienenden anderen Daten berechenbar sind, und wobei jeder Datensatz Messdaten enthält, die sich in etwa auf dasselbe Kontrollvolumen Bahn- bzw. Rohmaterial, insbesondere Papier bzw. Papierrohstoff, beziehen.

Aufgrund dieser Ausbildung wird also ein System zur computergestützten Messung von Qualitäts- und/oder Prozessdaten mit wenigstens einem softwarebasierten Sensor geschaffen, mit dem unter anderem aktuelle Informationen aus Anlagenmessungen, Qualitätsmessungen und -analysen nahezu in Echtzeit erstellt werden können, um beispielsweise Anlagenfahrweisen zu verbessern.

Die Roh-Messungen erhalten zweckmäßigerweise einen Zeitstempel.

Ein jeweiliger Softsensor-Algorithmus ist vorteilhafterweise mittels mathematischer Verfahren, z.B. mittels PCA, PLSR, SOM, Fuzzy, Neuronaler Netzwerke und/oder dergleichen, bestimmbar.

Bei einer bevorzugten praktischen Ausführungsform des erfindungsgemäßen Systems läuft der Softsensor-Algorithmus in der computerbasierten Operations- und Verknüpfungseinheit jeweils automatisch ab, sobald neue Eingangsdaten vorliegen.

Es sind jedoch beispielsweise auch solche Ausführungen denkbar, bei denen der Softsensor-Algorithmus in der computerbasierten Operationsund Verknüpfungseinheit automatisch mit einer festen oder vorgebbaren Zykluszeit abläuft.

In bestimmten Fällen kann es auch von Vorteil sein, wenn der Softsensor-Algorithmus in der computerbasierten Operations- und Verknüpfungseinheit jeweils auf eine manuelle Anforderung hin abläuft.

Bei einer weiteren zweckmäßigen Ausführungsform des erfindungsgemäßen Systems läuft der Softsensor-Algorithmus in der computerbasierten Operations- und Verknüpfungseinheit jeweils ab, wenn wenigstens eine Bedingung zur Ausführung erfüllt ist.

Nach jeweils erfolgtem Ablauf des Softsensor-Algorithmus kann das Ergebnis dann als die gewünschte Messung insbesondere über wenigstens eine Display- und/oder Druckereinheit ausgegeben werden.

Bevorzugt sind die Zeitstempel zur Kompensation von Transport-Totzeiten, die das Kontrollvolumen während des Herstellungs- bzw. Veredelungsprozesses durchläuft, jeweils mit einem Offset versehbar.

Bei der Synchronisation von Daten, die am kontinuierlichen Prozess und an nachgelagerten Offline-Prozessen erfasst werden, ist die Benutzung von Transport-Totzeiten nicht das geeignete Mittel. Hier werden stattdessen bevorzugt eine z.B. am Bahnrand angebrachte Bahnlängeninformation und die Tambournummer herangezogen, um sicher zu stellen, dass die Messungen sich auf das gleiche Kontrollvolumen beziehen.

Von Vorteil ist insbesondere auch, wenn die Vorfilterung der Daten aufeinander abstimmbar ist, insbesondre auch unter Berücksichtigung der Genauigkeit, mit der die Gleichzeitigkeit der Datensätze bekannt ist. Dabei können die Daten insbesondere aus einem gleitenden Mittelwertfilter und einer vorgebbaren Fenstergröße ermittelbar sein.

Wenn nach der Kompensation der Totzeiten eine Gleichzeitigkeit mit einer Genauigkeit von beispielsweise 1 Minute garantiert ist, werden die Daten beispielsweise aus einem gleitenden Mittelwertfilter und einer Fenstergröße im Minuten-Bereich ermittelt (z.B. 5 min).

Um Messrauschen zu unterdrücken, kann es bei manchen Daten trotzdem angebracht sein, von dieser Regel abzuweichen und stärker zu filtern.

Werden z. B. eine Vielzahl von Daten z.B. nur als Tambour-Mittelwert erfasst, ist es nicht sinnvoll, andere Daten gleichzeitig sehr schwach gefiltert zu verwenden. Sie sollten ebenfalls in einer ähnlichen Größenordnung gefiltert werden.

Bevorzugt umfassen die Eingangsdaten auch Daten aus anderen Abschnitten des Herstellungs- bzw. Veredelungsprozesses als die Zieldaten.

So können die Zieldaten beispielsweise aus dem Prozessabschnitt Aufrollung der Papiermaschine stammen (z.B. Qualitätsdaten bei der Aufrollung), und die Eingangsdaten können unter anderem z.B. Prozessdaten aus anderen Prozessabschnitten sein, die der Papiermaschine vorgelagert sind oder ihr zuarbeiten, wie z.B. Farbküche, Wasseraufbereitung, Stoffaufbereitung, Konstanter Teil, usw.

Vorteilhafterweise umfasst das System wenigstens einen vorzugsweise durch ein Entwurfstool bestimmbaren Softsensor.

Dabei können mittels des Entwurfstools insbesondere aufgezeichnete Eingangsdaten und Zieldaten aus einer Datenbank mit historischen Daten extrahierbar sein. Aus den historischen Daten sind zweckmäßigerweise zumindest zwei Gruppen von Datensätzen auswählbar, wobei eine erste Gruppe einen der Berechnung des Softsensor-Algorithmus dienenden Lern-Datensatz und eine zweite Gruppe einen der Prüfung des berechneten Softsensor-Algorithmus dienenden Test-Datensatz mit anderen Daten enthält. Der Lern-Datensatz kann gegebenenfalls noch weiter in Gruppen von Datensätzen unterteilt sein, die während des Lernprozesses verschiedenen Zwecken dienen. Mittels des Entwurfstools ist vorteilhafterweise auch prüfbar, welche Eingangsdaten nicht mit den Zieldaten korreliert sind, wobei die betreffenden Eingangsdaten aus dem Lern-Datensatz eliminierbar sind. Von Vorteil ist insbesondere auch, wenn mittels des Entwurfstools prüfbar ist, welche Eingangsdaten im Lern-Datensatz redundant sind, wobei vorzugsweise nur Eingangsdaten weiterverwendet werden, die die Korrelation mit den Zieldaten verbessern.

Vorteilhafterweise ist mittels des Entwurfstools auch prüfbar, welche Eingangsdaten im Lern-Datensatz in einem nicht linearen Zusammenhang mit den Zieldaten stehen, wobei vorzugsweise die nicht linearen Daten dem Lern-Datensatz hinzufügbar sind. Vorteilhafterweise ist mittels des Entwurfstools die Berechnungsformel des Softsensor-Algorithmus mit dem Lern-Datensatz bestimmbar. Von Vorteil ist insbesondere auch, wenn mittels des Entwurfstools die Berechnungsformel des Softsensor-Algorithmus anhand des Test-Datensatzes prüfbar ist. Vorzugsweise ist mittels des Entwurfstools dann die Berechnungsformel des Softsensor-Algorithmus in einem zugeordneten Computer oder Rechner implementierbar, über den dann bei einer jeweiligen Änderung der Eingangsdaten die Zieldaten ausgebbar sind und der sich damit wie ein Sensor verhält.

Bei einer zweckmäßigen praktischen Ausführungsform des erfindungsgemäßen Systems ist der Softsensor-Algorithmus durch wiederholtes automatisches Anstarten des Entwurfstools bzw. -vorgangs automatisch insbesondere an langsame Änderungen des Herstellungs- bzw. Veredelungsprozesses anpassbar, wobei vorzugsweise Daten aus einem bestimmten Zeitfenster in der Vergangenheit weiterverwendbar sind.

Besonders vorteilhaft ist die Verwendung des wenigstens einen Softsensor umfassenden erfindungsgemäßen Systems bei der Herstellung und/oder Veredelung von Materialbahnen, insbesondere Papier- oder Kartonbahnen.

Dabei wird bevorzugt wenigstens ein Softsensor des Systems zur Überprüfung zumindest eines reellen Sensors verwendet. So kann beispielsweise wenigstens ein Softsensor des Systems für das Flächengewicht und/oder die Dicke der Materialbahn verwendet werden, um einen zugeordneten Scanner zu überprüfen. Dabei werden zweckmäßigerweise zwei Softsensoren des Systems verwendet, um vorzugsweise anhand einer Zwei-aus-drei-Regel zu entscheiden, ob eine eventuelle Störung in einem Softsensor oder im Scanner vorliegt. So könnte beispielsweise ein erster Softsensor des Systems z.B. Durchfluss, Konsistenz und/oder dergleichen betreffende Daten aus dem Bereich eines Stoffauflaufs und ein zweiter Softsensor des Systems z.B. Durchfluss, Konsistenz und/oder dergleichen betreffende Daten aus einem Dickstoff-Zufluss heranziehen.

Es hat sich gezeigt, dass außer dem Durchfluss und der Konsistenz noch andere Prozessgrößen notwendig sind, um das Flächengewicht hinreichend genau vorherzusagen. Ist beispielsweise bekannt, dass der Konsistenzmesser empfindlich auf Asche reagiert, so kann zur besseren Vorhersage des Flächengewichts der Materialbahn außer einer Durchfluss- und Konsistenzmessung zusätzlich eine Aschemessung erfolgen und/oder die Aschedosierungsmenge gemessen werden.

Zur Vorhersage der Bahndicke kann vorteilhafterweise zumindest auch eine der vorliegenden Prozessgrößen mit herangezogen werden: Stoffzusammensetzung, Presseinstellungen, Kalandereinstellungen.

In Verbindung mit der Überprüfung mehrere Sensoren kann gegebenenfalls eine entsprechende Alarmierung aktivierbar sein.

Von Vorteil ist insbesondere auch, wenn wenigstens ein Softsensor des Systems dazu verwendet wird, einen oder mehrere reelle Sensoren im Fall einer Störung zumindest zeitweise zu ersetzen.

Dabei kann der jeweilige Ersatz insbesondere automatisch erfolgen, wobei ein reeller Sensor vorzugsweise anhand einer Zwei-aus-drei-Regel als gestört identifiziert wird ("hot backup").

Bisher konnte der Prozess im Fall eines gestörten reellen Sensors nicht mehr geregelt weiter funktionieren. Je nach Güte des Softsensors und der geforderten Papierqualität kann der reelle Sensor im Störungsfall erfindungsgemäß auch durch einen Softsensor ersetzt werden. Ein sofortiges Abstellen der Maschine ist demzufolge nicht mehr erforderlich.

Umgekehrt kann ein Softsensor des Systems auch durch einen reellen Sensor und einen anderen Sensor, insbesondere Softsensor, überprüft und gegebenenfalls ersetzt werden.

So kann beispielsweise mit zwei Softsensoren das Flächengewicht vorhergesagt werden. Zeigt einer der Softsensoren plötzlich deutlich andere Werte an, ist dies ein Hinwies darauf, dass einer der zugrunde liegenden Sensoren defekt ist. Mit Hilfe weitere Prozessgrößen kann das Fehlerbild weiter eingeschränkt werden. So kann beispielsweise die Funktion eines Durchflussmessers mit den Messergebnissen anderer Durchflussmesser geprüft werden (Wasserbilanz). Ist der Durchflussmesser nicht die Ursache, so kommt für das Fehlverhalten der Konsistenztransmitter in Betracht. Die Konsistenz kann jedoch auch aus anderen Prozessgrößen ermittelt werden (Massenbilanz). Im Endeffekt ist es dann möglich, mit Hilfe weiterer Prozessgrößen, einschließlich des reellen Flächengewichtsensors und eines Soft-Flächengewichtsensors, den Konsistenzsensor zu ersetzen und die daran hängenden Regelungen weiter am Laufen zu halten.

Dass ein Sensor durch andere ersetzt werden kann, drückt sich vor allem durch Kollinearitäten in den vielen Prozessgrößen aus.

Besonders vorteilhaft ist insbesondere auch die Verwendung wenigstens eines Softsensors des Systems zur sortenunabhängigen Kalibrierung eines oder mehrerer reeller Sensoren.

Reelle oder echte Sensoren können häufig nur bei einem bestimmten Betriebspunkt oder in einem bestimmten Betriebsbereich der Maschine kalibriert werden. So lässt sich beispielsweise die Papier-Feuchte mit einer Kalibrierung nur bei einem bestimmten Flächengewicht genau messen.

Ändert sich nun aber das Flächengewicht, so ist eine andere Kalibrierung erforderlich.

Um die Kalibrierung zu erleichtern, besitzen reelle Sensoren häufig mehrere interne Messkanäle. Häufig ist jedoch auch dies nicht ausreichend. Die Kalibrierung ist immer noch nicht ganz unabhängig vom Betriebspunkt der Maschine.

Vorteilhafterweise wird daher entsprechend einer weiteren vorteilhaften Anwendung des erfindungsgemäßen Systems zumindest ein interner Messkanal wenigstens eines reellen Sensors zur Berechnung der eigentlichen Messgröße durch Einbeziehung weiterer Prozess- und Qualitätsdaten erweitert. Beispielsweise im Zusammenhang mit einem Feuchtesensor können beispielsweise das Flächengewicht, die Faserart und/oder dergleichen mit einbezogen werden.

Als weiteres Beispiel sei die Messung des Trockengehaltes genannt, die an einer bestimmten Stelle im Entwässerungsprozess besser mit einem Softsensor funktionieren wird, der zu den rohen Messkanälen (z.B. optische, elektromagnetische, radioaktive Absorptionen) überdies Prozessparameter wie z.B. die Stoffkonsistenz im Stoffauflauf, Stoffart, Einstellungen der Entwässerungsparameter, und/oder dergleichen mit verwendet.

In bestimmten Fällen kann es auch von Vorteil sein, wenn wenigstens ein Softsensors des Systems anstelle eines jeweiligen reellen Sensors verwendet wird, solange der reelle Sensor noch nicht einsatzbereit ist.

Dies kann beispielsweise beim Anfahren der Produktion geschehen, d.h. bevor die Bahn überführt wird, kann das Flächengewicht bereits eingestellt werden. Bevor die Scanner die Bahn messen, können bereits weitere Maschineneinstellungen richtig erfolgen, um z.B. Dicke, Glanz und/oder Feuchte einzustellen.

Von Vorteil ist überdies die Verwendung wenigstens eines Softsensors des Systems, um während des Herstellungs- bzw. Veredelungsprozesses Qualitätsdaten zu messen, die üblicherweise nur im Labor messbar sind und/oder die online mittels reeller Sensoren kostspieliger und/oder unzuverlässiger messbar sind. Dabei kann ein jeweiliger Softsensor beispielsweise verwendet werden, um die Porosität, Bedruckbarkeit, Festigkeitsparameter und/oder dergleichen zu messen.

Wird ein Softsensor verwendet, um während der Produktion Qualitätsdaten zu messen, die üblicherweise nur im Labor messbar sind oder die online mit reellen Sensoren nur sehr teuer oder unzuverlässig messbar sind, so werden bevorzugt während des Herstellungs- bzw. Veredelungsprozesses die zu erwartenden Qualitätsdaten für die aktuellen Messgrößen mit Hilfe der Berechnungsformel des Softwaresensor-Algorithmus berechnet und überwacht.

Für den Fall, dass ein berechneter Wert außerhalb der Toleranzgrenze liegt, können ein Warnsignal für das Maschinenführerpersonal erzeugt und/oder vorzugsweise durch eine automatische Regelung vorgebbare Maßnahmen ergriffen werden.

Die vorgebbaren Maßnahmen können beispielsweise eine Änderung von Prozessparametern umfassen, um die Ursache für die Abweichung direkt zu beheben. Alternativ oder zusätzlich ist auch eine Änderung von Parametern aus Prozessschritten denkbar, die auf den für die Abweichung verantwortlichen Teilprozess folgen.

Führt beispielsweise ein Störung in der Aschezufuhr zu schlechteren zu erwartenden Bedruckbarkeiten, so kann das Maschinenpersonal beispielsweise durch Ändern von Prozessparametern zur direkten Behebung der Ursache für die Abweichung die Störung nach einigen Stunden, z.B. nach 6 Stunden, beheben. Für das zwischenzeitlich produzierte schlechte Rohpapier können durch Ändern von Parametern aus Prozessschritten, die auf den für die Abweichung verantwortlichen Teilprozess folgen, die Kalandereinstellungen derart verändert werden, dass trotz fehlerhaftem Rohpapier die zu erwartenden Bedruckbarkeitswerte des fertigen SC-Papiers innerhalb der Toleranz liegen.

Im folgenden seien einige Beispiele für Qualitätsdaten genannt, die für ein derartiges Verfahren von Bedeutung sind:
So können gemäß einer zweckmäßigen Verwendung des erfindungsgemäßen Systems während des Herstellungs- bzw. Veredelungsprozesses beispielsweise Qualitätsdaten gemessen werden, die standardmäßig für jeden Tambour im Labor gemessen werden, wobei die betreffenden Qualitätsdaten vorzugsweise Festigkeiten, Porosität, Oberflächeneigenschaften und/oder dergleichen umfassen. Der Hauptvorteil besteht hier in der stark verkürzten Zeit zwischen Störungsentstehung und Störungserkennung durch den Softsensor.
Gemäß einer weiteren zweckmäßigen Verwendung des erfindungsgemäßen Systems werden während des Herstellungs- bzw. Veredelungsprozesses Qualitätsdaten gemessen, die bisher nicht für jeden Tambour gemessen wurden, wobei die betreffenden Qualitätsdaten vorzugsweise Bedruckbarkeitswerte wie insbesondere Mottling, Missing Dots und/oder dergleichen an nach einem standardisierten Labor- oder Industriedruckverfahren bedruckten Papieren umfassen. Neben dem Vorteil des Zeitgewinns bei der Störungserkennung ist hier vor allem von besonderer Bedeutung, dass durch den Softsensor die Messungen teilweise ersetzt werden können, ausgenommen die zur Überprüfung der Softsensor-Gleichung erforderlichen Messungen, oder dass auf eine für die Qualitätssicherung notwendige Erhöhung der Anzahl von Messungen verzichtet werden kann.
Von Vorteil ist insbesondere auch die Verwendung wenigstens eines Softsensors des erfindungsgemäßen Systems, um Qualitätsparameter wie beispielsweise die Porosität, Bedruckbarkeit, Feuchtigkeitsparameter und/oder dergleichen automatisch zu regeln.
Alternativ oder zusätzlich kann insbesondere auch wenigstens ein Softsensor des erfindungsgemäßen Systems zur Ermittlung von Prozess-Kennlinien verwendet werden.
Wird beispielsweise ein Softsensor entworfen, um die Feuchte an der Aufrollung zu ermitteln und umfassen die Eingangsdaten insbesondere die Aktion der Feuchtestellglieder, Parameter aus dem Bereich der Entwässerung, die Stoffzusammensetzung und die Stoffmenge sowie den Zustand der Bespannungen, kann man aus dem Softsensor ablesen, wie sich die Änderung eines Prozessparameters, z.B. der Pressen-Linienkraft, abhängig vom Bespannungszustand auf die Endfeuchte auswirkt.
Von Vorteil ist insbesondere auch, wenn wenigstens ein Softsensor des erfindungsgemäßen Systems im Rahmen einer Wenn-dann-Analyse verwendet wird, um vor einer Änderung von Prozessgrößen die voraussichtliche Wirkung dieser Änderungen auf den Herstellungs- bzw. Veredelungsprozess vorherzusagen. Dabei kann die Vorhersage insbesondere für wenigstens eine Prozess- und/oder Qualitätsregelung verwendet werden.

Wird beispielsweise die Presseneinstellung verändert, so kann damit vorhergesagt werden, wie der Dampfdruck zu verändern ist, um die Auswirkung auf die Endfeuchte zu kompensieren. Eine automatische Regelung kann dann die Presseneinstellung in der vom Bediener gewünschten Weise verstellen und damit auch die Einstellung der Trockenpartie in koordinierter Weise so anpassen, dass die Endfeuchte unbeeinflusst bleibt.

Gemäß einer weiteren vorteilhaften Ausgestaltung der Erfindung wird wenigstens ein Softsensor des erfindungsgemäßen Systems zusammen mit zumindest einem mathematischen Optimierungsverfahren verwendet, um optimale Maschineneinstellungen und/oder Prozessparameter zu ermitteln.

Dabei können wieder wenigstens ein Softsensor des erfindungsgemäßen Systems durch ein Entwurfstool bestimmt werden, mittels des Entwurfstools aufgezeichnete Eingangsdaten und Zieldaten aus einer Datenbank mit historischen Daten extrahiert werden und aus den historischen Daten zumindest zwei Gruppen von Datensätzen ausgewählt werden, wobei eine erste Gruppe eine der Berechnung des Softsensor-Algorithmus dienenden Lern-Datensatz und eine zweite Gruppe einen der Prüfung des berechneten Softsensor-Algorithmus dienenden Test-Datensatz mit anderen Daten enthält.

Zweckmäßigerweise werden Maschineneinstellungen und/oder Prozessparameter bezüglich bestimmter Qualitätseigenschaften mittels wenigstens eines mathematischen Optimierungsverfahrens optimiert. So ist beispielsweise eine Minimierung unter Nebenbedingungen, eine Minimierung mehrerer Größen (z.B. Vektoroptimierung) und/oder dergleichen denkbar.

Zur Verifikation kann wenigstens ein Bestätigungsversuch durchgeführt werden.

Bevorzugt wird der Herstellungs- bzw. Veredelungsprozess auf die optimierten Maschineneinstellungen bzw. Prozessparameter umgestellt.

In den Unteransprüchen sind weitere Besonderheiten der Erfindung angegeben.

Unter Bezugnahme auf die Zeichnung werden nachfolgend einige zur Erfindung gehörende Teilaspekte ergänzend erörtert.

In der Zeichnung zeigen:
- Figur 1: eine schematische Darstellung einer rein beispielhaften Ausführungsform eines Systems zu computergestützten Messung von Qualitäts- und/ oder Prozessdaten bei der Herstellung und/oder Veredelung von Materialbahnen,
- Figur 2: in schematischer Darstellung eine beispielhafte Anwendung des Systems zur Überwachung von QCS-Sensoren durch zwei Softsensoren und
- Figur 3: in schematischer Darstellung eine beispielhafte Anwendung des Systems zur sortenunabhängigen Kalibrierung von Sensoren.

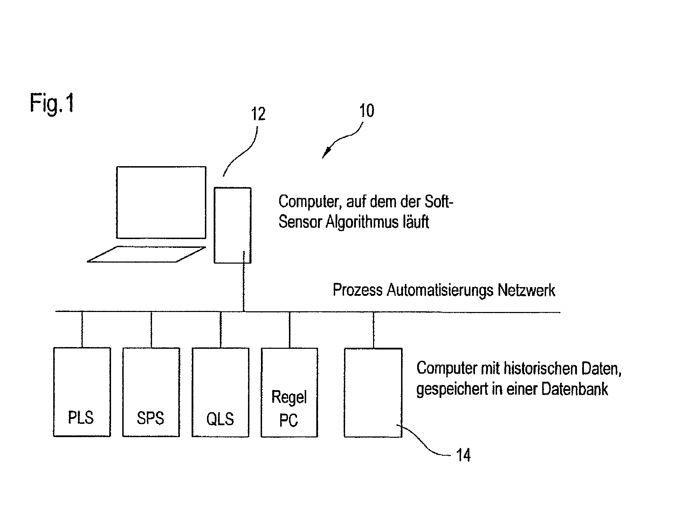

Figur 1 zeigt in schematischer Darstellung eine rein beispielhafte Ausführungsform eines Systems 10 zur computergestützten Messung von Qualitäts- und/oder Prozessdaten bei der Herstellung und/oder Veredelung von Materialbahnen, bei denen es sich insbesondere um Papier- oder Kartonbahnen handeln kann.

Das System 10 umfasst einen Computer bzw. Operations- und Verknüpfungseinheit 12, auf der ein Softsensor-Algorithmus läuft und die in ein Automatisierungssystem eingebettet ist.

Das Automatisierungssystem kann beispielsweise einen PLS, einen QLS, einen SPS und/oder einen weiteren Regel-PC umfassen.

Wie anhand der Figur 1 zu erkennen ist, ist beim vorliegenden Ausführungsbeispiel zudem ein separater Computer 14 vorgesehen, der eine Datenbank mit historischen Prozess- und Qualitätsdaten enthält. Diese Daten können grundsätzlich auch auf anderen Einheiten vorliegen, müssen jedoch beim Entwurf des Softsensor-Algorithmus zugänglich sein.

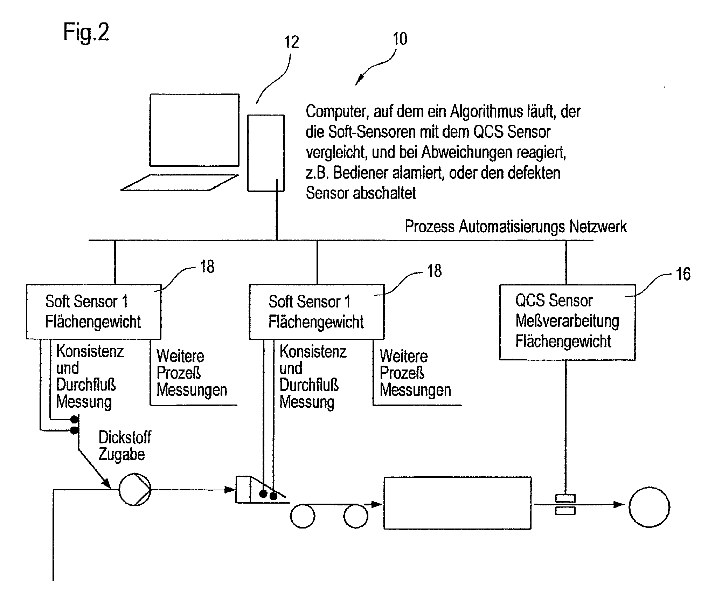

Figur 2 zeigt in schematischer Darstellung eine beispielhafte Anwendung des Systems 10 zur Überprüfung wenigstens eines QCS-Sensors 16 (QCS = quality control systems) durch zwei Softsensoren 18.

Das System 10 umfasst wieder einen Computer- bzw. eine Operationsund Verknüpfungseinheit 12. Auf diesem Computer 12 läuft ein Algorithmus, der die Softsensoren 18 mit dem QCS-Sensor 16 vergleicht und bei Abweichungen reagiert, indem z.B. der Bediener alarmiert und/oder der defekte Sensor abgeschaltet wird.

Der Computer 12 ist wieder in ein Automatisierungssystem eingebettet.

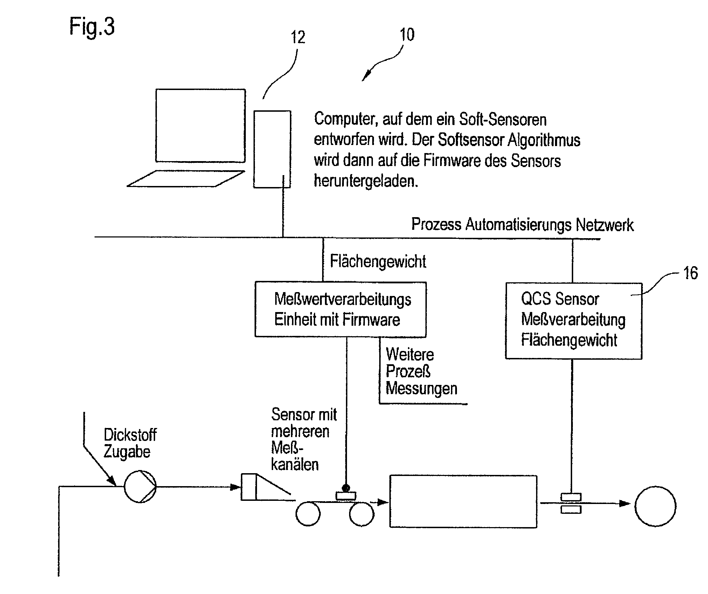

Figur 3 zeigt in schematischer Darstellung eine beispielhafte Anwendung des erfindungsgemäßen Systems 10 zur sortenunabhängigen Kalibrierung von Sensoren.

Das System 10 umfasst wieder einen Computer bzw. eine Operations- und Verknüpfüngseinheit 12. Auf diesem Computer 12 wird ein Softsensor entworfen. Der Softsensor-Algorithmus wird dann auf die Firmware des Sensors runtergeladen.

Der Computer 12 ist wieder in ein Automatisierungssystem eingebettet.

### Bezugszeichenliste

- 10: System
- 12: Computer, Operations- und Verknüpfungseinheit
- 14: Computer
- 16: QCS-Sensor
- 18: Softsensor

## Patentansprüche

1. System (10) zur computergestützten Messung von Qualitätsund/oder Prozessdaten bei der Herstellung und/oder Veredelung von Materialbahnen, insbesondere Papier- oder Kartonbahnen, durch Korrelation mit Roh-Meßdaten, wobei
die Roh-Meßdaten in Form von vielen anderen Qualitäts-bzw. Prozeßdaten während des Herstellungs- bzw. Veredelungsprozesses vorliegen,
in die Roh-Meßdaten auch Messungen von Qualitätsparametern im Labor mit einbeziehbar sind,
die Roh-Meßdaten zu Datensätzen zusammenfassbar sind, die jeweils gleichzeitig ermittelt wurden,
bestimmte Labor- oder Qualtitätsmessungen als Zieldaten auswählbar sind, die mittels wenigstens eines in einer computerbasierten Operations- und Verknüpfungseinheit (12) ablaufenden Softsensor-Algorithmus aus den als Eingangsdaten dienenden anderen Daten berechenbar sind, und wobei
jeder Datensatz Meßdaten enthält, die sich in etwa auf dasselbe Kontrollvolumen Bahn- bzw. Rohmaterial, insbesondere Papier bzw. Papierrohstoff, beziehen.

2. System nach Anspruch 1,
**dadurch gekennzeichnet,**
**dass** die Roh-Meßdaten mit einen Zeitstempel versehbar sind.

3. System nach Anspruch 1 oder 2,
**dadurch gekennzeichnet,**
**dass** der Softsensor-Algorithmus mittels mathematischer Verfahren, z.B. mittels PCA, PLSR, SOM, Fuzzy, Neuronaler Netzwerke und/ oder dergleichen, bestimmbar ist.

4. System nach einem der vorhergehenden Ansprüche,
**dadurch gekennzeichnet,**
**dass** der Softsensor-Algorithmus in der computerbasierten Operatios- und Verknüpfungseinheit (12) jeweils automatisch abläuft, sobald neue Eingangsdaten vorliegen.

5. System nach einem der vorhergehenden Ansprüche,
**dadurch gekennzeichnet,**
**dass** der Softsensor-Algorithmus in der computerbasierten Operatios- und Verknüpfungseinheit (12) automatisch mit einer festen oder vorgebbaren Zykluszeit abläuft.

6. System nach einem der vorhergehenden Ansprüche,
**dadurch gekennzeichnet,**
**dass** der Softsensor-Algorithmus in der computerbasierten Operatios- und Verknüpfungseinheit (12) jeweils auf eine manuelle Anforderung hin abläuft.

7. System nach einem der vorhergehenden Ansprüche,
**dadurch gekennzeichnet,**
**dass** der Softsensor-Algorithmus in der computerbasierten Operatios- und Verknüpfungseinheit (12) jeweils abläuft, wenn wenigstens eine Bedingung zur Ausführung erfüllt ist.

8. System nach einem der Ansprüche 4 bis 7,
**dadurch gekennzeichnet,**
**dass** das Ergebnis als die gewünschte Messung insbesondere über wenigstens eine Display- und/oder Druckereinheit ausgebbar ist.

9. System nach einem der vorhergehenden Ansprüche,
**dadurch gekennzeichnet,**
**dass** die Zeitstempel zur Kompensation von Transport-Totzeiten, die das Kontrollvolumen während des Herstellungs- bzw. Veredelungsprozesses durchläuft, jeweils mit einem Offset versehbar sind.

10. System nach einem der vorhergehenden Ansprüche,
**dadurch gekennzeichnet,**
**dass** die Vorfilterung der Daten aufeinander abstimmbar ist, insbesondere auch unter Berücksichtigung der Genauigkeit, mit der die Gleichzeitigkeit der Datensätze bekannt ist.

11. System nach Anspruch 10,
**dadurch gekennzeichnet,**
**dass** die Daten aus einem gleitenden Mittelwertfilter und einer vorgebbaren Fenstergröße ermittelbar sind.

12. System nach einem der vorhergehenden Ansprüche,
**dadurch gekennzeichnet,**
**dass** die Eingangsdaten auch Daten aus anderen Abschnitten des Herstellungs- bzw. Veredelungsprozesses als die Zieldaten umfassen.

13. System nach einem der vorhergehenden Ansprüche,
**dadurch gekennzeichnet,**
**dass** es wenigstens einen vorzugsweise durch ein Entwurfstool bestimmbaren Softsensor (18) umfasst.

14. System nach Anspruch 13,
**dadurch gekennzeichnet,**
**dass** mittels des Entwurfstools aufgezeichnete Eingangsdaten und Zieldaten aus einer Datenbank mit historischen Daten extrahierbar sind.

15. System nach Anspruch 14,
**dadurch gekennzeichnet,**
**dass** aus den historischen Daten zumindest zwei Gruppen von Datensätzen auswählbar sind, wobei eine erste Gruppe einen der Berechnung des Softsensor-Algorithmus dienenden Lern-Datensatz und eine zweite Gruppe einen der Prüfung des berechneten Softsensor-Algorithmus dienenden Test-Datensatz mit anderen Daten enthält.

16. System nach Anspruch 15,
**dadurch gekennzeichnet,**
**dass** der Lern-Datensatz weiter in Gruppen von Datensätzen unterteilt ist, die während des Lernprozesses verschiedenen Zwecken dienen.

17. System nach einem de vorhergehenden Ansprüche,
**dadurch gekennzeichnet,**
**dass** mittels des Entwurfstools prüfbar ist, welche Eingangsdaten nicht mit den Zieldaten korreliert sind und die betreffenden Eingangsdaten aus dem Lern-Datensatz eliminierbar sind.

18. System nach einem de vorhergehenden Ansprüche,
**dadurch gekennzeichnet,**
**dass** mittels des Entwurfstools prüfbar ist, welche Eingangsdaten im Lern-Datensatz redundant sind, wobei vorzugsweise nur Eingangsdaten weiterverwendet werden, die die Korrelation mit den Zieldaten verbessern.

19. System nach einem de vorhergehenden Ansprüche,
**dadurch gekennzeichnet,**
**dass** mittels des Entwurfstools prüfbar ist, welche Eingangsdaten im Lern-Datensatz in einem nichtlinearen Zusammenhang mit den Zieldaten stehen, wobei vorzugsweise die nichtlinearen Daten dem Lern-Datensatz hinzufügbar sind.

20. System nach einem de vorhergehenden Ansprüche,
**dadurch gekennzeichnet,**
**dass** mittels des Entwurfstools die Berechnungsformel des Softsensor-Algorithmus mit dem Lern- Datensatz bestimmbar ist.

21. System nach einem de vorhergehenden Ansprüche,
**dadurch gekennzeichnet,**
**dass** mittels des Entwurfstools die Berechnungsformel des Softsensor-Algorithmus anhand des Test-Datensatzes prüfbar ist.

22. System nach einem de vorhergehenden Ansprüche,
**dadurch gekennzeichnet,**
**dass** mittels des Entwurfstools die Berechnungsformel des Softsensor-Algorithmus in einem zugeordneten Computer oder Rechner (12) implemetierbar ist, über den dann bei einer jeweiligen Änderung der Eingangsdaten die Zieldaten ausgebbar sind und der sich damit wie ein Sensor verhält.

23. System nach einem der vorhergehenden Ansprüche,
**dadurch gekennzeichnet,**
**dass** der Softsensor-Algorithmus durch wiederholtes automatisches Anstarten des Entwurfstools bzw. -vorgangs automatisch insbesondere an langsame Änderungen des Herstellungs- bzw. Veredelungsprozesses anpassbar ist, wobei vorzugsweise Daten aus einem bestimmten Zeitfenster in der Vergangenheit weiterverwendbar sind.

24. Verwendung des wenigstens einen Softsensor umfassenden Systems (10) nach einem oder mehreren der vorhergehenden Ansprüche bei der Herstellung und/oder Veredelung von Materialbahnen, insbesondere Papier- oder Kartonbahnen.

25. Verwendung nach Anspruch 24,
**dadurch gekennzeichnet,**
**dass** wenigstens ein Softsensor (18) des Systems (10) zur Überprüfung zumindest eines reellen Sensors (16) verwendet wird.

26. Verwendung nach Anspruch 25,
**dadurch gekennzeichnet,**
**dass** wenigstens ein Softsensor (18) des Systems (10) für das Flächengewicht und/ oder die Dicke der Materialbahn verwendet wird, um einen zugeordneten Scanner zu überprüfen.

27. Verwendung nach Anspruch 26,
**dadurch gekennzeichnet,**
**dass** zwei Softsensoren (18) des Systems (10) verwendet werden, um vorzugsweise anhand einer Zwei-aus-drei-Regel zu entscheiden, ob eine eventuelle Störung in einem Softsensor (18) oder im Scanner vorliegt.

28. Verwendung nach Anspruch 27,
**dadurch gekennzeichnet,**
**dass** ein erster Softsensor (18) des Systems (10) z.B. Durchfluss, Konsistenz und/oder dergleichen betreffende Daten aus dem Bereich eines Stoffauflaufs und ein zweiter Softsensor (18) des Systems z.B. Durchfluss, Konsistenz und/oder dergleichen betreffende Daten aus einem Dickstoff-Zufluss heranzieht.

29. Verwendung nach einem der vorhergehenden Ansprüche,
**dadurch gekennzeichnet,**
**dass** zur Vorhersage des Flächengewichts der Materialbahn außer einer Durchfluss- und Konsistenzmessung zusätzlich eine Aschemessung erfolgt und/oder die Aschedosierungsmenge gemessen wird.

30. Verwendung nach einem der vorhergehenden Ansprüche,
**dadurch gekennzeichnet,**
**dass** zur Vorhersage der Bahndicke zumindest auch eine der folgenden Prozeßgrößen mit herangezogen wird: Stoffzusammensetzung, Presseinstellungen, Kalandereinstellungen.

31. Verwendung nach einem der vorhergehenden Ansprüche,
**dadurch gekennzeichnet,**
**dass** in Verbindung mit der Überprüfung reeller Sensoren gegebenenfalls eine entsprechende Alarmierung aktivierbar ist.

32. Verwendung nach einem der vorhergehenden Ansprüche,
**dadurch gekennzeichnet,**
**dass** wenigstens ein Softsensor (18) des Systems (10) dazu verwendet wird, einen oder mehrere reelle Sensoren (16) im Fall einer Störung zumindest zeitweise zu ersetzen.

33. Verwendung nach Anspruch 32,
**dadurch gekennzeichnet,**
**dass** der jeweilige Ersatz automatisch erfolgt, wobei ein reeller Sensor (16) vorzugsweise anhand einer Zwei-aus-drei-Regel als gestört identifiziert wird.

34. Verwendung nach einem der vorhergehenden Ansprüche,
**dadurch gekennzeichnet,**
**dass** ein Softsensor (18) des Systems (10) durch einen reellen Sensor (16) und einen anderen Sensor, insbesondere Softsensor (18), überprüft und gegebenenfalls ersetzt wird.

35. Verwendung nach einem der vorhergehenden Ansprüche,
**dadurch gekennzeichnet,**
**dass** wenigstens ein Softsensor (18) des Systems (10) zur sortenunabhängigen Kalibrierung eines oder mehrerer reeller Sensoren (16) verwendet wird.

36. Verwendung nach Anspruch 35,
**dadurch gekennzeichnet,**
**dass** zumindest ein interner Messkanal wenigstens eines reellen Sensors zur Berechnung der eigentlichen Messgröße durch Einbeziehung weiterer Prozess- und Qualitätsdaten erweitert wird.

37. Verwendung nach Anspruch 36,
**dadurch gekennzeichnet,**
**dass** im Fall eines reellen Feuchtesensors das Flächengewicht, die Faserart und/oder dergleichen mit einbezogen wird.

38. Verwendung nach Anspruch 36,
**dadurch gekennzeichnet,**
**dass** an wenigstens einer Stelle im Entwässerungsprozess zur Messung des Trockengehalts ein Softsensor (18) des Systems (10) verwendet wird, der zu den rohen, z.B. eine optische, elektromagnetische und/oder radioaktive Absorption betreffenden Meßkanälen außerdem weitere Prozeßparameter wie z.B. Stoffkonsistenz in einem Stoffauflauf, Stoffart, Einstellungen der Entwässerungsparameter und/oder dergleichen mit einbezieht.

39. Verwendung nach einem der vorhergehenden Ansprüche,
**dadurch gekennzeichnet,**
**dass** wenigstens ein Softsensor (18) des Systems (10) anstelle eines jeweiligen reellen Sensors (16) verwendet wird, solange der reelle Sensor (16) noch nicht einsatzbereit ist.

40. Verwendung nach einem der vorhergehenden Ansprüche,
**dadurch gekennzeichnet,**
**dass** wenigstens ein Softsensor (18) des Systems (10) verwendet wird, um während des Herstellungs- bzw. Veredelungsprozesses Qualitätsdaten zu messen, die üblicherweise nur im Labor messbar sind und/oder die online mittels reeller Sensoren (16) kostspieliger und/oder unzuverlässiger messbar sind.

41. Verwendung nach Anspruch 40,
**dadurch gekennzeichnet,**
**dass** der Softsensor (18) verwendet wird, um die Porosität, Bedruckbarkeit, Festigkeitsparameter und/oder dergleichen zu messen.

42. Verwendung nach Anspruch 40 oder 41,
**dadurch gekennzeichnet,**
**dass** während des Herstellungs- bzw. Veredelungsprozesses die zu erwartenden Qualitätsdaten für die aktuellen Messgrößen mit Hilfe der Berechnungsformel des Softsensor-Algorithmus berechnet und überwacht werden.

43. Verwendung nach einem der Ansprüche 40 bis 42,
**dadurch gekennzeichnet,**
**dass** für den Fall, dass ein berechneter Wert außerhalb der Toleranzgrenzen liegt, ein Warnsignal erzeugt und/oder vorzugsweise durch eine automatische Regelung vorgebbare Maßnahmen ergriffen werden.

44. Verwendung nach Anspruch 43,
**dadurch gekennzeichnet,**
**dass** die vorgebbaren Maßnahmen eine Änderung von Prozessparametern umfassen, um die Ursache für die Abweichung direkt zu beheben.

45. Verwendung nach Anspruch 43 oder 44,
**dadurch gekennzeichnet,**
**dass** die vorgebbaren Maßnahmen eine Änderung von Parametern aus Prozessschritten umfassen, die auf den für die Abweichung verantwortlichen Teilprozess folgen.

46. Verwendung nach einem der Ansprüche 40 bis 45,
**dadurch gekennzeichnet,**
**dass** während des Herstellungs- bzw. Veredelungsprozesses Qualitätsdaten gemessen werden, die standardmäßig für jeden Tambour im Labor gemessen werden, wobei die betreffenden Qualitätsdaten vorzugsweise Festigkeiten, Porosität, Oberflächeneigenschaften und/oder dergleichen umfassen.

47. Verwendung nach einem der Ansprüche 40 bis 46,
**dadurch gekennzeichnet,**
**dass** während des Herstellungs- bzw. Veredelungsprozesses Qualitätsdaten gemessen werden, die bisher nicht für jeden Tambour gemessen wurden, wobei die betreffenden Qualitätsdaten vorzugsweise Bedruckbarkeitswerte wie insbesondere Mottling, Missing Dots und/oder dergleichen an nach einem standardisierten Laboroder Industriedruckverfahren bedruckten Papieren umfassen.

48. Verwendung nach einem der vorhergehenden Ansprüche,
**dadurch gekennzeichnet,**
**dass** wenigstens ein Softsensor (18) des Systems (10) verwendet wird, um Qualitätsparameter wie beispielsweise die Porosität, Bedruckbarkeit, Festigkeitsparameter und/oder dergleichen automatisch zu regeln.

49. Verwendung nach einem der vorhergehenden Ansprüche,
**dadurch gekennzeichnet,**
**dass** wenigstens ein Softsensor (18) des Systems (10) zur Ermittlung von Prozess-Kennlinien verwendet wird.

50. Verwendung nach einem der vorhergehenden Ansprüche,
**dadurch gekennzeichnet,**
**dass** wenigstens ein Softsensor (18) des Systems (10) im Rahmen einer Wenn-dann-Analyse verwendet wird, um vor einer Änderung von Prozessgrößen die voraussichtliche Wirkung dieser Änderungen auf den Herstellungs- bzw. Veredelungsprozess vorherzusagen.

51. Verwendung nach Anspruch 50,
**dadurch gekennzeichnet,**
**dass** die Vorhersage für wenigstens eine Prozess- und/oder Qualitätsregelung verwendet wird.

52. Verwendung nach einem der vorhergehenden Ansprüche,
**dadurch gekennzeichnet,**
**dass** wenigstens ein Softsensor (18) des Systems (10) zusammen mit zumindest einem mathematischen Optimierungsverfahren verwendet wird, um optimale Maschineneinstellungen und/oder Prozessparameter zu ermitteln.

53. Verwendung nach Anspruch 52,
**dadurch gekennzeichnet,**
**dass** wenigstens ein Softsensor (18) des Systems (10) durch ein Entwurfstool bestimmt wird, mittels des Entwurfstools aufgezeichnete Eingangsdaten und Zieldaten aus einer Datenbank mit historischen Daten extrahiert werden und aus den historischen Daten zumindest zwei Gruppen von Datensätzen ausgewählt werden, wobei eine erste Gruppe einen der Berechnung des Softsensor-Algorithmus dienenden Lern-Datensatz und eine zweite Gruppe einen der Prüfung des berechneten Softsensor-Algorithmus dienenden Test-Datensatz mit anderen Daten enthält.

54. Verwendung nach Anspruch 52 oder 53,
**dadurch gekennzeichnet,**
**dass** Maschineneinstellungen und/oder Prozessparameter bezüglich bestimmter Qualitätseigenschaften mittels wenigstens eines mathematischen Optimierungsverfahrens optimiert werden.

55. Verwendung nach einem der Ansprüche 52 bis 54,
**dadurch gekennzeichnet,**
**dass** zur Verifikation wenigstens ein Bestätigungsversuch durchgeführt wird.

56. Verwendung nach einem der Ansprüche 52 bis 55,
**dadurch gekennzeichnet,**
**dass** der Herstellungs- bzw. Veredelungsprozess auf die optimierten Maschineneinstellungen bzw. Prozessparameter umgestellt wird.
